# EUROPEAN PATENT SPECIFICATION

(11) **EP 3 188 930 B1**
(45) Date of publication and mention of the grant of the patent: **12.09.2018**
(21) Application number: 15744864.8
(22) Date of filing: 25.05.2015
(51) Int. Cl.: B60N 2/42, B60N 2/80

(54) **HEAD REST FOR ABSORBING OF AN ECCENTRIC COLLISION OF A CAR**
KOPFSTÜTZE ZUM ABSORBIEREN EINER EXZENTRISCHEN KOLLISION EINES FAHRZEUGES
APPUI-TETE POUR ABSORBER UNE COLLISION EXCENTRIQUE D'UN VEHICULE

(30) Priority: 26.05.2014 CZ 20140360
(43) Date of publication of application: 12.07.2017
(73) Proprietor: Centrum dopravniho vyzkumu, v.v.i., 636 00 BRNO (CZ)
(72) Inventor: ANDRES, Josef, 628 00 Brno (CZ); RUCKER, Jan, 542 32 Upice (CZ)
(74) Representative: Malusek, Jiri
(86) International application number: PCT/CZ2015/000051
(87) International publication number: WO 2015/180700

(56) References cited:
- DE-A1- 10 005 196
- FR-A1- 2 927 855

## Description

### Background of the invention

The invention relates to the headrest for the interception of head motion in case of eccentric collision of the vehicle.

### State of the art

Currently headrests of all vehicles are constructed to protect the head in case of centric collision, i.e. in the longitudinal axis of the vehicle, both in case of a vehicle collision with an obstacle ahead, and in case of a collision from another vehicle from behind. Such headrest is known e.g. from the file CZ 1998-2331 A1. It consists of two parts connected by a telescopic extensible strut, which is, in the case of a collision from behind, activated by pyrocartridge, which then leads the front part forward and reduce the head bump.

The head moves the forward inertia, respectively, first backward and then forward, but always by different speed than the upper body. Then the consequences are varied - from injured neck muscles to the spine fracture. While injuries are also caused by collisions in low speeds. Such headrests are tested and evaluated.
There are known headrests, which should intercept also eccentric collisions. In the document DE 10 2012 009 366 A1 the headrest is placed on two hollow rods and inside the headrest are inflatable segments. In case of collision is led the compressed air throughout rods to the headrest and the volume and shape of the headrest is increased. A similar concept is also introduced in the headrest according to the document DE 10 2012 005 883 A1.

In the document DE 10 2009 021 673 A1 is the concept of headrest that is simple, but its part are hinged side rails at both edges, which are pivotally anchored around a horizontal pin which, when activated, reclines and creates protection at sides. Similar concept is also introduced in headrest according to the document DE 10 2009 021 267 A1.

In the document DE 10 2008 039 235 A1 are hidden side rails extended forward by crosslink mechanism.

In the document DE 10 2005 022 416 A1 are side rails over itself in the back and during activation ride on a circular track rotating around the vertical pin where they are placed.

From DE 100 05 196 A1 a head rest is known where inside of the head rest there is a firm basic arc-shaped guiding arm arranged, which does not protrude over the front face of the head rest. In the free ends of the guiding arm there are also arc-shaped extensions slideably arranged on both sides of the guiding arm and forwards running in case of the crash. This extensions are with their free ends arranged in the free end parts of the tilting side-cushions, and with the other end they are anchored inside of the head rest and in the rest position they are aligned with the font surface of the head rest. On the other ends of the extentions there are stop members, which stops the movement of the extensions, repectively side cusions when contacting stop protrusions arranged on the basic guiding arm.

Analysis of accidents, however, showed that only a small part of them is truly centric basis. The vast majority is more or less oblique, when hitting an obstacle or another vehicle happens at a certain angle. Physiology of collision is then significantly different than is assumed in current design of the headrests. The head is first moved obliquely sideways and thereafter, when it is situated outside the longitudinal axis of the seat and thus the headrest, it returns, but to a different place than to installed headrest. As a result, there are often injuries, which are frequently legitimated by wrong headrest setting. The opposite is true - even well installed headrest of the current structure does not prevent injuries arisen from the oblique collision of vehicles!

The aim of the invention is to introduce the headrest, which could safely absorb sudden and unpredictable movement of the head during eccentric collision of vehicles and prevent head and neck injuries.

### Summary of the invention

Deficiencies mentioned above are eliminated to a considerable extent by the headrest for the interception of eccentric collision of the vehicle according to the invention as defined by the technical features set forth in claim 1, and whose principles consist in that *the guiding part of the expanding construction* is fixedly arranged on the holders for insertion into seats and stable guiding part comprises of a pair of lower guiding rails and a pair of upper guiding rails which are connected together by a central web, wherein in the gap between each pair of lower and upper guiding rails are slidably disposed by their free endings of the guiding bar, wherein their second endings are connected by the supporting connection bar and forms an extending supportable console, wherein the supporting connection bar has side cushions and between the central web and the supporting connection bar of the supporting console is arranged the extendable tool.

In a preferred embodiment, between the edges of the central cushion and side cushions is arranged an extensible upholstery leg around the supporting connection bar and the extendable means.

In another preferred embodiment, the extendable means is constructed as the spring.

### Description of drawings

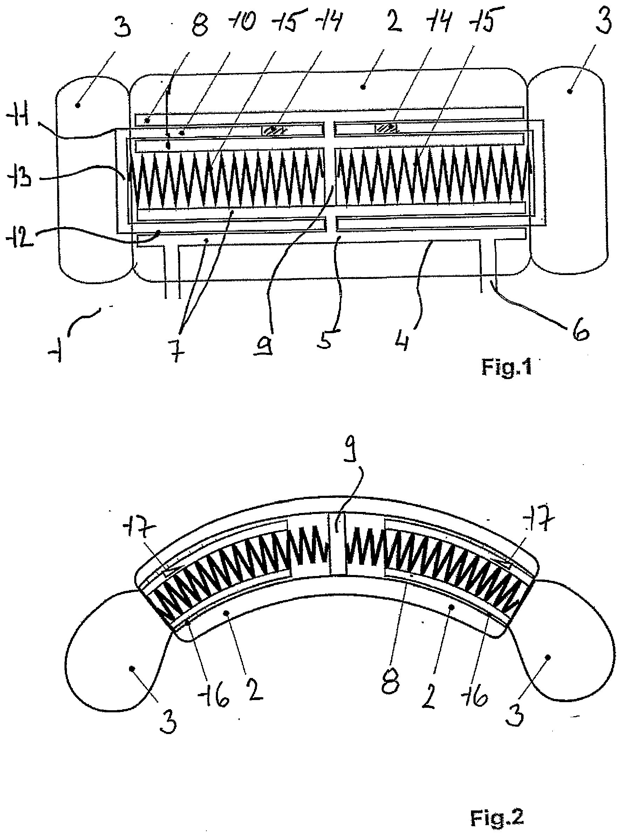

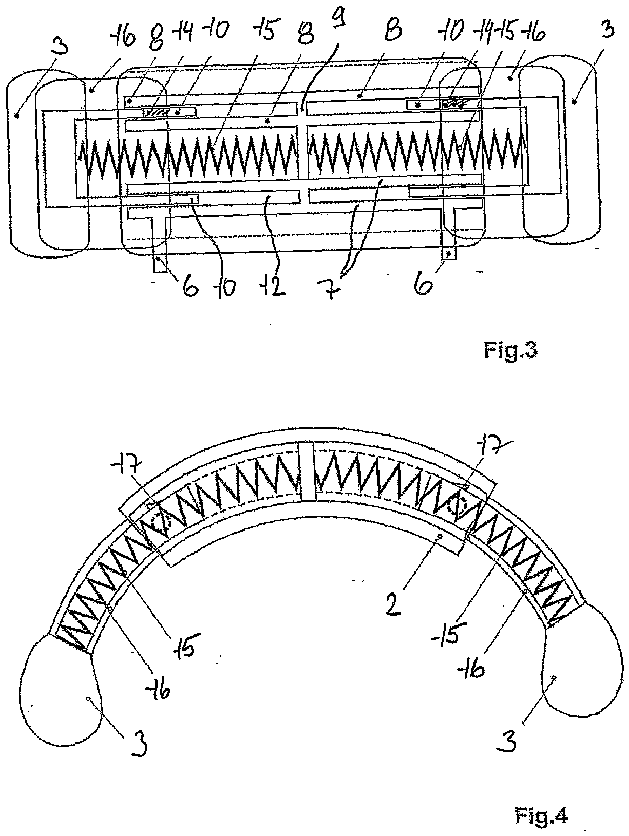

The invention will be presented in more details by drawings, where Fig.1 is a schematic front view of a headrest according to the invention in the basic position, especially on the functional parts of the expanding construction, Fig.2 is a top view of the headrest of Fig.1, Fig.3 is again a schematic front view of the headrest according to the invention, but in the activated position, and Fig.4 is then a top view of the activated headrest of Fig.3.

### Preferred embodiment of the invention

Fig.1 is a schematic front view of a headrest according to the invention in the basic position. It can be seen here that it consists of two central cushions, side cushions and an expanding construction. This expanding construction is arc-shaped, as it is seen from the Fig.2, which is a top view of the headrest. Its stable guiding part is fixedly arranged on holders, which are anchored in a not shown seat. Stable guiding part consists of a pair of guiding rails and a pair of upper guiding rails, which are connected together by a central web.

The gap between each guiding and upper guiding rail is adapted for receiving of two guiding bars, which are slide disposed therein and form free endings of a extending supporting console in an U-shape. Guiding bars are connected by a supporting connection bar on their opposite ends, which carries side cushions and forms the last part of the extending supporting console. Each extending supporting console of the expanding construction is provided with a safety member, which releases this extending supporting console from the stable guiding part only in the case of activation, i.e. during collision. Stop is schematically indicated.

Guiding bars of the supporting consoles are slide mounted on the guiding and upper guiding rails, e.g. by not shown guiding U-bars, or bars themselves consist of welded-together U-bars.

Safety members can be can be activated e.g. by a sensor in the seat, which detects crash into the body of the seat, by suitable pyrocartridge and similar known tools, as described e.g. in file EP2013059 B1 or DE 44336 01C1, which are not shown and are not subject of the invention. The optimal variant would be a sensor set in the back to a certain angle and value of deceleration / acceleration.

Between the central web and the supporting connection bar is arranged a spring as an extendable tool. When the spring is released, it pushes the supporting connection bar with side cushions, as can be seen in the Fig. 3 and 4. It is also seen that there is arranged an extendable upholstery leg around the spring. It is obvious that not necessarily spring has to be used as an extendable tool, but also an air bag, a bag filled with foam under pressure, etc.

When the safety member is activated, the spring pushes the supporting connection bar and causes the movement of the extending supporting console on the arched track defined by the arc of guiding and upper guiding rails, respectively, throughout the whole expanding construction. It can be seen best in Fig.4. By this movement extended side cushions then capture the movement of the passenger's head and upholstery leg prevents accidental head contact with the mechanical parts of the extending supporting console and spring.

It is possible optimization of the material, eventually layering, mounting, etc. based on measurements and testing. Other options are in optimization of the headrest shape according to the shape and size of the passenger's head and thus saving these parameters into the vehicle memory. The result would be the headrest always set for a specific person, same as nowadays in some vehicles is already set and saved the position of the driver's seat.

Described headrest could be an integral part of the anatomic backrest, respectively the whole seat with perfect side bolsters.

This way constructed headrest could be further equipped with automatic shifting systems or shape changing during crash, eventually with speakers.

Presented headrest should prevent head injuries and whiplash in an oblique and lateral crash as that activates the side components to prevent lateral movement of the head or its move out of the headrest during reverse movement of the person sitting in the seat.

## Claims

1. Headrest for the interception of eccentric collision of a vehicle, consisting of an inner expanding construction, on which ***a*** central cushion (2) and side cushions (3) are arranged, wherein the inner expanding construction (4) is *arc-shaped* and is provided with an activatable safety member (14), **characterized in that,** the guiding part (5) of the expanding construction (4) is firmly arranged on holders (6) for insertion into seats and the stable guiding part (5) comprises a pair of lower guiding rails (7) and a pair of upper guiding rails (8), which are connected together by a central web (9), wherein in a gap (12) between each pair of lower and upper guiding rails (7,8) guiding bars (10) are slidably disposed with their free endings, wherein their second endings are connected with a supporting connection bar (13) and they form an extending support console (11), wherein the supporting connection bar (13) is provided by side cushions (3) and between the central web (9) and the supporting connection bar (13) of the supporting console (11) extendable means are arranged.

2. Headrest according to the claim 1, **characterized in that,** between the edges of the central cushion (2) and side cushions (3) an extensible upholstery leg (16) around the supporting connection bar (11) and the extendable means is arranged.

3. Headrest according to the claim 1, **characterized in that,** the extendable means are performed as a spring (15).

## Patentansprüche

1. Kopfstütze zum Absorbiren einer exzentrischen Kollision eines Fahrzeuges bestehend aus einer inneren expandierenden Konstruktion, auf derer eine mittlere Polstrierung (2) und eine Seitenpolstrierung (3) angeordnet sind, wobei die innere expandierende Konstruktion (4) bogenformig ist und sie ist mit einer aktivationsfahigen Sicherung (14) versehen, **dadurch gekennzeichnet, dass** ein stabiler Führungsteil (5) der expandierenden Konstruktion (4) fest auf den Ständer (6) für das Einschub in den Sitz angeordnet ist, und der stabile Führungsteil (5) ein Paar von unteren Führungsschienen (7) und ein Paar von oberen Führungsschienen (8) beinhaltet, die miteinander durch eine mittlere Stange (9) zusammengekoppelt sind, wobei in dem Spalt (12) zwischen jedem Paar von unteren und oberen Führungsschienen (7,8) mit seinen freien Enden Führungsleisten (10) angeordnet sind, wobei die anderen Enden durch eine Tragskupplung (13) mitenander gekoppelt sind und sie formen eine Verlängerungstragkonsole (11), wobei die Tragskupplung (13) mit dem Randpolstrierung (3) versehen ist und zwischen der mittleren Stange (9) und der Tragskupplung (13) der Verlängerungstragkonsole (11) expandierende Milttel angeordnet sind.

2. Kopfstütze nach de Anspruch 1, **dadurch gekennzeichnet, dass** zwischen den Ränder der mittleren Polstrierung (2) und der Seitenpolstrierung (3) eine ausdehbare Polsterhose (16) rund um die Verlängerungstragkonsole (11) und den expandierenden Mittlel angeordnet ist.

3. Kopfstütze nach de Anspruch 1, **dadurch gekennzeichnet, dass** die expandierende Mittlel als Feder (15) durchgeführt sind.

## Revendications

1. Appui-tête pour absorber une collision excentrique d'un véhicule comprenant une structure intérieure extensible sur laquelle sont disposées une matelassure centrale (2) et des matelassures latérales (3), la structure intérieure extensible (4) étant en forme d'arc et elle est munie d'un verrou activable (14), **caractérisé en ce que** la partie fixe de guidage (5) de la structure extensible (4) est agencé de manière fixe sur les broches (6) d'emboîtement dans le siège et la partie fixe de guidage (5) comporte une paire de rails de guidage inférieurs (7) et une paire de rails de guidage supérieurs (8) qui sont reliées les uns aux autres par une barre centrale (9), dans l'espace vide (12) entre chaque paire des rails de guidage supérieurs et inférieurs (7,8) étant montées coulissants par ses extrémités libres les glissières de guidage (10), les extrémités opposées étant reliées par un support porteur d'accouplement (13) formant une console porteuse d'allongement (11), le support porteur d'accouplement (13) étant muni d'une matelassure latérale (3) et entre la barre centrale (9) et le support porteur d'accouplement (13) de la console porteuse (11) étant disposés des moyens d'extension.

2. Appui-tête selon la revendication 1, **caractérisé en ce qu'**entre les bords de la matelassure centrale (2) et les matelassures latérales (3) un jambe de pantalon démontable rembourrée (16) est disposée autour de la console porteuse d'allongement (11) et les moyens d'extension.

3. Appui-tête selon la revendication 1, **caractérisé en ce que** les moyens d'estension sont réalisés sous forme de ressorts (15).
